# EUROPEAN PATENT SPECIFICATION

(11) **EP 3 340 805 B1**
(45) Date of publication and mention of the grant of the patent: **21.02.2024**
(21) Application number: 16849878.0
(22) Date of filing: 26.09.2016
(51) Int. Cl.: A23L 27/00, A23L 27/30, A23L 27/10

(54) **ZERO CALORIE BEVERAGE COMPRISING A BLEND OF GLYCOSIDES**
KALORIENFREIES GETRÄNK ENTHALTEND EINE MISCHUNG VON GLYKOSIDEN
BOISSON SANS CALORIES COMPRENANT UN MELANGE DE GLYCOSIDES

(30) Priority: 25.09.2015 US 201562232943 P
(43) Date of publication of application: 04.07.2018
(73) Proprietor: The Coca-Cola Company, Atlanta, GA 30313 (US)
(72) Inventor: HIGIRO, Juvenal, Atlanta, Georgia 30102 (US); TAN, Xiaoliang, Marietta, GA 30068 (US); BECHMAN, Allison, Atlanta, GA 30319 (US); HERSKOVIC, Joseph, E., Roswell, GA 30076 (US); XIONG, Rui, Atlanta, GA 30308 (US); WRIGHT, Kristin, Woodstock, Georgia 30188 (US)
(74) Representative: Dehns
(86) International application number: PCT/US2016/053794
(87) International publication number: WO 2017/053980

(56) References cited:
- WO-A1-2016/085919
- US-A1- 2014 099 403
- US-A1- 2014 171 519
- US-A1- 2014 171 519
- US-A1- 2014 322 389
- US-A1- 2014 342 043
- US-A1- 2015 017 284
- US-A1- 2015 017 284
- MASAYA OHTA ET AL: "Characterization of Novel Steviol Glycosides from Leaves of Stevia rebaudiana Morita", OYO TOSHITSU KAGAKU - JOURNAL OF APPLIED GLYCOSCIENCE., vol. 57, no. 3, 17 August 2010 (2010-08-17), pages 199-209, XP055121080, JP ISSN: 1340-3494, DOI: 10.5458/jag.57.199
- PRAKASH 1. ET AL.: 'Development of next generation stevia sweetener: rebaudioside M' FOODS vol. 3, no. 1, 27 February 2014, pages 162 - 175, XP055309887

## Description

### FIELD OF THE INVENTION

The present invention relates generally to zero-calorie beverages comprising quaternary blends of rebaudioside B, rebaudioside D, rebaudioside M and rebaudioside A.

### BACKGROUND OF THE INVENTION

Natural caloric sugars, such as sucrose, fructose and glucose, are utilized to provide a pleasant taste to beverages, foods, pharmaceuticals, and oral hygienic/cosmetic products. Sucrose, in particular, imparts a taste preferred by consumers. Although sucrose provides superior sweetness characteristics, it is disadvantageously caloric.

Non-caloric or low caloric sweeteners have been introduced to satisfy consumer demand. However, non- and low caloric sweeteners taste different from natural caloric sugars in ways that frustrate consumers. On a taste basis, non-caloric or low caloric sweeteners exhibit a temporal profile, maximal response, flavor profile, mouth feel, and/or adaptation behavior that differ from sugar. Specifically, non-caloric or low caloric sweeteners exhibit delayed sweetness onset, lingering sweet aftertaste, bitter taste, metallic taste, astringent taste, cooling taste and/or licorice-like taste. On a source basis, many non-caloric or low caloric sweeteners are synthetic chemicals. Consumer desire for natural non-caloric or low caloric sweeteners that tastes like sucrose remains high.

Zero- and reduced-calorie beverage compositions comprising natural high potency sweeteners, as well as rare sugars, are disclosed in US 2014/0322389. Sweetener compositions comprising a quaternary blend of rebaudioside A, B, D and M are disclosed in post-published WO 2016/085919 A1.

*Stevia rebaudiana* Bertoni is a perennial shrub of the *Asteraceae* (*Compositae*) family native to certain regions of South America. Its leaves have been traditionally used for hundreds of years in Paraguay and Brazil to sweeten local teas and medicines. The plant is commercially cultivated in Japan, Singapore, Taiwan, Malaysia, South Korea, China, Israel, India, Brazil, Australia and Paraguay.

The leaves of the plant contain a mixture containing diterpene glycosides in an amount ranging from about 10% to 15% of the total dry weight. These diterpene glycosides are about 30 to 450 times sweeter than sugar. Structurally, the diterpene glycosides are characterized by a single base, steviol, and differ by the presence of carbohydrate residues at positions C13 and C19. Typically, on a dry weight basis, the four major steviol glycosides found in the leaves of Stevia are dulcoside A (0.3%), rebaudioside C (0.6-1.0%), rebaudioside A (3.8%) and stevioside (9.1%). Other glycosides identified in Stevia extract include rebaudioside B, D, E, and F, steviolbioside and rubusoside. Among these, only stevioside and rebaudioside A are available on a commercial scale.

Use of isolated steviol glycosides has been limited to date by certain undesirable taste properties, including licorice taste, bitterness, astringency, sweet aftertaste, bitter aftertaste, licorice aftertaste, which become more prominent at increased concentrations.

Accordingly, there remains a need to develop natural reduced or non-caloric sweeteners that provide a temporal and flavor profile similar to the temporal and flavor profile of sucrose.

### SUMMARY OF THE INVENTION

The present invention, which is defined by the claims, relates to a zero-calorie beverage comprising a quaternary blend of rebaudioside B, rebaudioside D, rebaudioside A and rebaudioside M, wherein the quaternary blend: (a) comprises from about 5% to about 20% rebaudioside B by weight, from about 9% to about 25% rebaudioside D by weight, from about 50% to about 75% rebaudioside M by weight, and from about 9% to about 25% rebaudioside A by weight; (b) provides a total concentration of steviol glycosides of about 500 ppm; and (c) provides a sucrose equivalence of from about 9.5% (w/v) to about 10.5% (w/v).

Advantageously, the quaternary blends used in the zero-calorie beverages of the present invention are useful as non-caloric sweeteners that provide desirable sensory profiles when added to consumables (e.g. beverages) that are superior to consumables sweetened with a single steviol glycoside sweetener (e.g. rebaudioside A).

The beverages or beverage products can further contain additional sweeteners, additives and/or functional ingredients. In particular embodiments, the beverage or beverage product further comprises a rare sugar, preferably allulose.

Also disclosed, but not part of the present invention, is a method of preparing a consumable comprising the aforementioned quaternary blend, or a sweetener composition comprising the same. This method may comprise providing a consumable matrix and adding the quaternary blend, or sweetener composition comprising the same, to the consumable matrix.

### DETAILED DESCRIPTION OF THE INVENTION

The present invention relates to a zero-calorie beverage comprising a quaternary blend of rebaudioside B, rebaudioside D, rebaudioside A and rebaudioside M, which is defined by the claims.

The sweetness of a given composition is typically measured with reference to a solution of sucrose. See generally "A Systematic Study of Concentration-Response Relationships of Sweeteners," G.E. DuBois, D.E. Walters, S.S. Schiffman, Z.S. Warwick, B.J. Booth, S.D. Pecore, K. Gibes, B.T. Carr, and L.M. Brands, in Sweeteners: Discovery, Molecular Design and Chemoreception, D.E. Walters, F.T. Orthoefer, and G.E. DuBois, Eds., American Chemical Society, Washington, DC (1991), pp 261-276.

The sweetness of a non-sucrose sweetener can be measured against a sucrose reference by determining the non-sucrose sweetener's sucrose equivalence (SE). Typically, taste panelists are trained to detect sweetness of reference sucrose solutions containing between 1-15% sucrose (w/v). Other non-sucrose sweeteners are then tasted at a series of dilutions to determine the concentration of the non-sucrose sweetener that is as sweet as a given percent sucrose reference. For example, if a 1% solution of a sweetener is as sweet as a 10% sucrose solution, then the sweetener is said to be 10 times as potent as sucrose, and has 10% sucrose equivalence.

### Quaternary Blends of Rebaudioside B, Rebaudioside D, Rebaudioside M and Rebaudioside A

The quaternary blend used in the zero-calorie beverage of the invention comprises from about 5% to about 20% rebaudioside B by weight, such as, for example, from about 5% to about 15%, about 5% to about 10%, about 10% to about 20%, about 10% to about 15% or about 15% to about 20%. In a particular embodiment, the quaternary blend comprises about 10% rebaudioside B by weight.

The quaternary blend comprises from about 9% to about 25% rebaudioside D by weight, such as, for example, from about 9% to about 20%, about 9% to about 15%, about 14% to about 25%, about 14% to about 20% or about 19% to about 25%. In a particular embodiment, the quaternary blend comprises about 15% rebaudioside D by weight.

The quaternary blend comprises from about 50% to about 75% rebaudioside M by weight, such as, for example, from about 50% to about 70%, about 50% to about 65%, about 50% to about 60%, about 55% to about 75%, about 55% to about 70%, about 55% to about 65%, about 55% to about 65%, about 55% to about 60%, about 60% to about 75%, about 60% to about 70%, about 60% to about 65%, about 65% to about 75%, about 65% to about 70% and about 70% to about 75%. In a particular embodiment, the quaternary blend comprises about 60% rebaudioside M by weight.

The quaternary blend comprises from about 9% to about 25% rebaudioside A by weight, such as, for example, from about 9% to about 20%, about 9% to about 15%, about 14% to about 25%, about 14% to about 20% or about 19% to about 25%. In a particular embodiment, the quaternary blend comprises about 15% rebaudioside A by weight.

Taken together, the quaternary blend comprises from about 5% to about 20% rebaudioside B by weight, from about 9% to about 25% rebaudioside D by weight, from about 50% to about 75% rebaudioside M by weight and from about 9% to about 25% rebaudioside A by weight. In a more particular embodiment, the quaternary blend typically comprises about 10% rebaudioside B by weight, about 15% rebaudioside D by weight, about 60% rebaudioside M by weight and about 15% rebaudioside A by weight.

The relative amount of rebaudioside B, rebaudioside D, rebaudioside M and rebaudioside A within the quaternary blend can vary. In one embodiment, the quaternary blends comprise similar amounts of rebaudioside A and rebaudioside D, i.e. close to a 1:1 ratio.

In other embodiments, the rebaudioside A is present at a ratio of between about 1:3 and about 1:10 of the remaining rebaudiosides, such as, for example, between about 1:3 and about 1:7 or about 1:5 of the remaining rebaudiosides.

The quaternary blend of the present invention contains rebaudiosides B, D, M and A in amounts effective to provide the desired sweetness and/or flavor profile when added to a particular consumable, e.g. a beverage or beverage product.

The quaternary blend typically comprises rebaudiosides B, D, M and A in amounts effective to provide a total concentration of about 50 ppm to about 600 ppm when added to a consumable (preferably a beverage or beverage product), such as, for example, from about 50 ppm to about 500 ppm, from about 50 ppm to about 400 ppm, from about 50 ppm to about 300 ppm, from about 50 ppm to about 200 ppm, from about 50 ppm to about 100 ppm, from about 100 ppm to about 600 ppm, from about 100 ppm to about 500 ppm, from about 100 ppm to about 400 ppm, from about 100 ppm to about 300 ppm, from about 100 ppm to about 200 ppm, from about 200 ppm to about 600 ppm, from about 200 ppm to about 500 ppm, from about 200 ppm to about 400 ppm, from about 200 ppm to about 300 ppm, from about 300 ppm to about 600 ppm, from about 300 ppm to about 500 ppm, from about 300 ppm to about 400 ppm, from about 400 ppm to about 600 ppm, from about 400 ppm to about 500 ppm and from about 500 ppm to about 600 ppm. In more particular embodiments, the quaternary blend comprises rebaudiosides B, D and M in amounts effective to provide a total concentration of greater than about 50 ppm when added to a consumable, such as, for example, about 100 ppm, about 150 ppm, about 200 ppm, about 250 ppm, about 300 ppm, about 350 ppm, about 400 ppm, about 450 ppm, about 500 ppm, about 550 ppm and about 600 ppm. In a particular embodiment, the quaternary blend comprises rebaudiosides B, D, M and A in an amount effective to provide a concentration of about 500 ppm when added to a consumable, e.g. beverage or beverage product.

The quaternary blend typically comprises an amount of rebaudioside B effective to provide a concentration of about 10 to about 200 ppm in a consumable, such as, for example, from about 10 ppm to about 150 ppm, from about 10 ppm to about 100 ppm, from about 10 ppm to about 50 ppm, about 50 ppm to about 200 ppm, about 50 ppm to about 150 ppm, about 50 ppm to about 100 ppm, about 100 ppm to about 200 ppm, about 100 ppm to about 150 ppm, about 150 ppm to about 200 ppm. In another embodiment, the quaternary blend comprises an amount of rebaudioside B effective to provide a concentration from about 50 ppm to about 200 ppm when added to a consumable.

The quaternary blend typically comprises an amount of rebaudioside D effective to provide a concentration of about 20 ppm to about 200 ppm when added to a consumable, such as, for example, from about 20 ppm to about 150 ppm, about 20 ppm to about 100 ppm, about 20 ppm to about 50 ppm, about 50 ppm to about 200 ppm, about 50 ppm to about 150 ppm, about 50 ppm to about 100 ppm, about 100 ppm to about 200 ppm, about 100 ppm to about 150 ppm and about 150 ppm to about 200 ppm. In another embodiment, the quaternary blend comprises an amount of rebaudioside D effective to provide a concentration from about 50 ppm to about 200 ppm when added to a consumable.

The quaternary blend typically comprises an amount of rebaudioside M effective to provide a concentration of about 50 ppm to about 400 ppm when added to a consumable, such as, for example, from about 50 ppm to about 300 ppm, from about 50 ppm to about 200 ppm, from about 50 ppm to about 100 ppm, from about 100 ppm to about 400 ppm, from about 100 ppm to about 300 ppm, from about 100 ppm to about 200 ppm, from about 200 ppm to about 400 ppm, from about 200 ppm to about 300 ppm and from about 300 ppm to about 400 ppm.

The quaternary blend typically comprises an amount of rebaudioside A effective to provide a concentration of about 20 ppm to about 200 ppm when added to a consumable, such as, for example, from about 20 ppm to about 150 ppm, about 20 ppm to about 100 ppm, about 20 ppm to about 50 ppm, about 50 ppm to about 200 ppm, about 50 ppm to about 150 ppm, about 50 ppm to about 100 ppm, about 100 ppm to about 200 ppm, about 100 ppm to about 150 ppm and about 150 ppm to about 200 ppm. In another embodiment, the quaternary blend comprises an amount of rebaudioside A effective to provide a concentration from about 50 ppm to about 200 ppm when added to a consumable. The zero-calorie beverages of the present invention comprising the above-defined quaternary blends have less than 5 calories per 8 oz. (237 ml) serving.

According to the present invention, the quaternary blend mentioned above is present in the zero-calorie beverage composition in an amount effective to provide a concentration of steviol glycosides of about 500 ppm as the total concentration of steviol glycosides, and is also present in the zero-calorie sweetener composition in an amount effective to provide a sucrose equivalence from about 9.5% to about 10.5%, or about 10%.

In some embodiments, the sweetener compositions comprise the quaternary blend and at least one additional sweetener, where the at least one sweetener is different from those present in the quaternary blend.

The additional sweetener can be any known sweetener, e.g. a natural sweetener, a natural high potency sweetener, a synthetic sweetener.

In one embodiment, the sweetener is at least one natural high-potency sweetener. As used herein, the phrase "natural high potency sweetener" refers to any sweetener found naturally in nature and characteristically has a sweetness potency greater than sucrose, fructose, or glucose, yet has less calories. The natural high potency sweetener can be provided as a pure compound or, alternatively, as part of an extract.

In another embodiment, the sweetener is at least one synthetic sweetener. As used herein, the phrase "synthetic sweetener" refers to any composition which is not found naturally in nature and characteristically has a sweetness potency greater than sucrose, fructose, or glucose, yet has less calories.

In still other embodiments, combinations of natural high potency sweeteners and synthetic sweeteners are contemplated.

In other embodiments, the sweetener is at least one carbohydrate sweetener. Suitable carbohydrate sweeteners are selected from, but not limited to, the group consisting of sucrose, glyceraldehyde, dihydroxyacetone, erythrose, threose, erythrulose, arabinose, lyxose, ribose, xylose, ribulose, xylulose, allose, altrose, galactose, glucose, gulose, idose, mannose, talose, fructose, psicose, sorbose, tagatose, mannoheptulose, sedoheltulose, octolose, fucose, rhamnose, arabinose, turanose, sialose and combinations thereof.

Other suitable sweeteners include rebaudioside A, rebaudioside B, rebaudioside C, rebaudioside D, rebaudioside E, rebaudioside F, rebaudioside I, rebaudioside H, rebaudioside L, rebaudioside K, rebaudioside J, rebaudioside N, rebaudioside O, dulcoside A, dulcoside B, rubusoside, stevia, stevioside, mogroside IV, mogroside V, *Luo han guo,* siamenoside, monatin and its salts (monatin SS, RR, RS, SR), curculin, glycyrrhizic acid and its salts, thaumatin, monellin, mabinlin, brazzein, hernandulcin, phyllodulcin, glycyphyllin, phloridzin, trilobatin, baiyunoside, osladin, polypodoside A, pterocaryoside A, pterocaryoside B, mukurozioside, phlomisoside I, periandrin I, abrusoside A, steviolbioside and cyclocarioside I, sugar alcohols such as erythritol, sucralose, potassium acesulfame, acesulfame acid and salts thereof, aspartame, alitame, saccharin and salts thereof, neohesperidin dihydrochalcone, cyclamate, cyclamic acid and salts thereof, neotame, advantame, glucosylated steviol glycosides (GSGs) and combinations thereof.

In another embodiment, the sweetener is a rare sugar selected from allulose, sorbose, lyxose, ribulose, xylose, xylulose, D-allose, L-ribose, D-tagatose, L-glucose, L-fucose, L-arabinose, turanose and combinations thereof. The rare sugars can be present in the sweetener compositions in an amount from about 0.5% to about 3.0%, such as, for example, about 0.5% to about 2.5%, about 0.5% to about 2.0%, about 0.5% to about 1.5%, about 0.5% to about 1.0%, about 1.0% to about 3.0%, about 1.0% to about 2.5%, about 1.0% to about 2.0%, about 1.0% to about 1.5%, about 2.0% to about 3.0% and about 2.0% to about 2.5%. In a particular embodiment, the rare sugar is allulose.

In one embodiment, a sweetener composition comprises a quaternary blend of the present invention and a rare sugar. In a more particular embodiment, a sweetener composition comprises a quaternary blend of the present invention and allulose. In an even more particular embodiment, a sweetener composition comprises a quaternary blend of the present invention and allulose, wherein the allulose is present in an amount from about 0.5% to about 3.0%.

### Beverage and Beverage Products

The present invention is defined by the claims and relates to the above-defined zero-calorie beverage comprising a quaternary blend of rebaudioside B, rebaudioside D, rebaudioside A and rebaudioside M.

"Beverage product", as used herein, is a ready-to-drink beverage, a beverage concentrate, a beverage syrup, or a powdered beverage. Suitable ready-to-drink beverages include carbonated and non-carbonated beverages. Carbonated beverages include, but are not limited to, frozen carbonated beverages, enhanced sparkling beverages, cola, flavored sparkling beverages (e.g. lemon-lime, orange, grape, strawberry and pineapple), ginger-ale, soft drinks and root beer. Non-carbonated beverages include, but are not limited to, fruit juice, fruit-flavored juice, juice drinks, nectars, vegetable juice, vegetable-flavored juice, sports drinks, energy drinks, enhanced water drinks, enhanced water with vitamins, near water drinks (e.g., water with natural or synthetic flavorants), coconut water, tea type drinks (e.g. black tea, green tea, red tea, oolong tea), coffee, cocoa drink, beverage containing milk components (e.g. milk beverages, coffee containing milk components, café au lait, milk tea, fruit milk beverages), beverages containing cereal extracts and smoothies.

Beverage concentrates and beverage syrups are prepared with an initial volume of liquid matrix (e.g. water) and the desired beverage ingredients. Full strength beverages are then prepared by adding further volumes of water. Powdered beverages are prepared by dry-mixing all of the beverage ingredients in the absence of a liquid matrix. Full strength beverages are then prepared by adding the full volume of water.

Beverages comprise a matrix, i.e. the basic ingredient in which the ingredients - including the compositions of the present invention - are dissolved. In one embodiment, a beverage comprises water of beverage quality as the matrix, such as, for example deionized water, distilled water, reverse osmosis water, carbon-treated water, purified water, demineralized water and combinations thereof, can be used. Additional suitable matrices include, but are not limited to phosphoric acid, phosphate buffer, citric acid, citrate buffer and carbon-treated water.

The present invention relates to a zero-calorie beverage comprising a quaternary blend described herein, wherein the quaternary blend provides a total concentration of steviol glycosides of about 500 and the quaternary blend provides a sucrose equivalence from about 9.5% to about 10.5%, or about 10%.

The beverage or beverage product can further include at least one additional sweetener. Any of the sweeteners detailed herein can be used, including natural, non-natural, or synthetic sweeteners. These may be added to the beverage or beverage product either before, contemporaneously with or after the quaternary blend described herein.

In a preferred embodiment, the beverage or beverage products comprise a rare sugar - either as part of the sweetener composition or added to the beverage separately. Suitable rare sugars include, but are not limited to, allulose, sorbose, lyxose, ribulose, xylose, xylulose, D-allose, L-ribose, D-tagatose, L-glucose, L-fucose, L-arabinose, turanose and combinations thereof. The rare sugars can be present in beverage in an amount from about 0.5% to about 3.0%, such as, for example, about 0.5% to about 2.5%, about 0.5% to about 2.0%, about 0.5% to about 1.5%, about 0.5% to about 1.0%, about 1.0% to about 3.0%, about 1.0% to about 2.5%, about 1.0% to about 2.0%, about 1.0% to about 1.5%, about 2.0% to about 3.0% and about 2.0% to about 2.5%. In a particular embodiment, the rare sugar is allulose.

The beverage or beverage product can comprise additives including, but not limited to, carbohydrates, polyols, amino acids and their corresponding salts, poly-amino acids and their corresponding salts, sugar acids and their corresponding salts, nucleotides, organic acids, inorganic acids, organic salts including organic acid salts and organic base salts, inorganic salts, bitter compounds, caffeine, flavorants and flavoring ingredients, astringent compounds, proteins or protein hydrolysates, surfactants, emulsifiers, weighing agents, juice, dairy, cereal and other plant extracts, flavonoids, alcohols, polymers and combinations thereof. Any suitable additive described herein can be used.

The beverage or beverage product can contain one or more functional ingredients, detailed above. Functional ingredients include, but are not limited to, vitamins, minerals, antioxidants, preservatives, glucosamine, polyphenols and combinations thereof. Any suitable functional ingredient described herein can be used.

It is contemplated that the pH of the consumable, such as, for example, a beverage, does not materially or adversely affect the taste of the sweetener. A non-limiting example of the pH range of the beverage may be from about 1.8 to about 10. A further example includes a pH range from about 2 to about 5. In a particular embodiment, the pH of beverage can be from about 2.5 to about 4.2. On of skill in the art will understand that the pH of the beverage can vary based on the type of beverage. Dairy beverages, for example, can have pHs greater than 4.2.

The titratable acidity of a beverage may, for example, range from about 0.01 to about 1.0% by weight of beverage.

In one embodiment, the sparkling beverage product has an acidity from about 0.01 to about 1.0% by weight of the beverage, such as, for example, from about 0.05% to about 0.25% by weight of beverage.

The carbonation of a sparkling beverage product has 0 to about 2% (w/w) of carbon dioxide or its equivalent, for example, from about 0.1 to about 1.0% (w/w).

The beverage can be caffeinated or non-caffeinated.

The temperature of a beverage may, for example, range from about 4°C to about 100 °C, such as, for example, from about 4°C to about 25°C.

The beverage is a zero-calorie beverage that has less than about 5 calories per 8 oz. (237 ml) serving.

### EXAMPLES

### Example 1: Evaluation of Steviol Glycoside Blends with Improved Sensory Profile in Mock Beverage Preparation

Beverages were prepared with the following ingredients:

**TABLE 1**

| **Rebaudioside M-80* (100%) in Citric Acid / Potassium Citrate Buffer** | |
|---|---|
| **Ingredient** | **Amount (grams)** |
| Filtered water | 99.9 |
| Citric acid | 0.075 |
| Potassium citrate | 0.025 |
| **Steviol glycosides** | **0.025** |
| **Total** | **100** |

| | |
|---|---|
| *80% pure in a steviol glycoside mixture | |

**TABLE 2**

| **Rebaudioside M/B (80%/20%) in Citric Acid / Potassium Citrate Buffer** | |
|---|---|
| **Ingredient** | **Amount (grams)** |
| Filtered water | 99.9 |
| Citric acid | 0.075 |
| Potassium citrate | 0.025 |
| Steviol glycosides | 0.025 |
| **Total** | **100** |

**TABLE 3**

| **Rebaudioside M/D/A (60%/20%/20%) in Citric Acid / Potassium Citrate Buffer** | |
|---|---|
| **Ingredient** | **Amount (grams)** |
| Filtered water | 99.9 |
| Citric acid | 0.075 |
| Potassium citrate | 0.025 |
| Steviol glycosides | 0.025 |
| **Total** | **100** |

**TABLE 4**

| **Rebaudioside M/B/D (60%/20%/20%) in Citric Acid / Potassium Citrate Buffer** | |
|---|---|
| **Ingredient** | **Amount (grams)** |
| Filtered water | 99.9 |
| Citric acid | 0.075 |
| Potassium citrate | 0.025 |
| Steviol glycosides | 0.025 |
| **Total** | **100** |

**TABLE 5**

| **Rebaudioside M/B/A/D (60%/10%/15%/15%) in Citric Acid / Potassium Citrate Buffer** | |
|---|---|
| **Ingredient** | **Amount (grams)** |
| Filtered water | 99.9 |
| Citric acid | 0.075 |
| Potassium citrate | 0.025 |
| Steviol glycosides | 0.025 |
| **Total** | **100** |

Ingredients were added to filtered water while stirring until all solids were visibly dissolved. Afterwards, the pH and the titratable acidity expressed as % w/v citric acid were measured to ensure that they were close to the specifications (pH 3.3 and titratable acidity of 0.075% w/v). The beverages were then poured into glass bottles and stored at 4°C until sensory evaluation.

### Taste Evaluation

Taste tests were carried out with six experienced panelists whose work routine includes stevia evaluation and development in beverages. Bottles were removed from the refrigerator and beverage poured into 4oz plastic cups. Each panelist was served with about 50ml of each sample.

Panelists were instructed to rinse their palates with mineral water and eat an unsalted cracker followed with palate rinsing before evaluating the next sample.

All the panelists came to a consensus that the Rebaudioside B-containing samples had an improved overall sweetness compared with those without Rebaudioside B. They showed a fast sweetness onset and were more rounded and less bitter compared with those without Rebaudioside B.

Among all the samples, the blend Rebaudioside M/B/A/D was the best (least sweet lingering and bitter aftertaste), followed by the blend of Rebaudiosides M/B/D.

### EXAMPLE 2: Sensory Evaluation of Diet Lemon-Lime Carbonated Beverages Comprising Ternary Steviol Glycoside Blends [Reference Example]

The following steviol glycosides were used throughout the following example: rebaudioside M with 80% purity ("Rebaudioside M-80"), rebaudioside M with 95% purity ("Rebaudioside M-95"), rebaudioside A with 97% purity, rebaudioside B with 96% purity, and rebaudioside D with 96% purity.

Diet carbonated lemon-lime flavored beverages were prepared by combining filtered water (99.4%), citric acid (0.18%), potassium citrate (0.06%), potassium benzoate (0.025%), lemon lime flavor (0.1%) and 500 ppm (0.05%) of the steviol glycoside or steviol glycoside blend shown in Table 1. The beverages had a pH of 3.3 and a titratable acidity of 0.18% w/v. Food grade carbon dioxide was added to provide a carbonation of 3.8 volume of CO₂.

**Table 1: Diet Lemon-lime flavored Carbonated Beverages (without Allulose)**

| **Concentration (ppm)** | **Blending Ratio** | **Sensory comments** |
|---|---|---|
| 500 | Rebaudioside M-80 (100%) | Good sweetness, some sweet lingering and bitterness at the end |
| 500 | Rebaudioside M (80%) | Fast sweet onset, good sweetness profile, very slight sweet lingering, no bitter aftertaste |
| | Rebaudioside B (20%) | |
| 500 | Rebaudioside M (60%) | Good sweetness, astringent, bitter aftertaste, change in flavor profile, least preferred |
| | Rebaudioside D (20%) | |
| | Rebaudioside A (20%) | |
| | | |
| 500 | Rebaudioside M (60%) | Good sweetness, some sweet lingering and very slight |
| | Rebaudioside B (20%) | bitterness at the end, some mouth feel compared with |
| | Rebaudioside D (20%) | Reb-M 80, slightly less sweet than Reb-M 80 |

Diet carbonated lemon-lime flavored beverages were prepared by combining filtered water (96.9%), citric acid (0.18%), potassium citrate (0.06%), potassium benzoate (0.025%), lemon lime flavor (0.1%), 500 ppm (0.05%) of the steviol glycoside or steviol glycoside blend shown in Table 2 and 2.69% of allulose syrup (78% solids, Dolcia Prima^{™} batch YP14J01502, Tate & Lyle). The beverages had a pH of 3.3 and a titratable acidity of 0.18% w/v. Food grade carbon dioxide was added to provide carbonation of 3.8 volume of CO₂.

**Table 2: Diet Lemon-lime flavored Carbonated Beverages (with Allulose)**

| **Concentration (ppm)** | **Blending Ratio** | **Allulose Concentration (% dry base)** | **Sensory comments** |
|---|---|---|---|
| 500 | Rebaudioside M-80 (100%) | 2.1 | Good sweetness, slight sweet lingering, more body |
| 500 | Rebaudioside M-95 (80%) | 2.1 | Fast sweet onset, good sweetness, rounded and good mouthfeel, slight sweet lingering |
| | Rebaudioside B (20%) | | |
| 500 | Rebaudioside M-95 (60%) | 2.1 | Good sweetness, slightly astringent and sweet lingering, slight bitterness |
| | Rebaudioside D (20%) | | |
| | Rebaudioside A (20%) | | |
| 500 | Rebaudioside M-95 (60%) | 2.1 | More body, more rounded than Reb-M 80 sample, slight sweet lingering, slight bitterness. |
| | Rebaudioside B (20%) | | |
| | Rebaudioside D (20%) | | |

The beverages were evaluated by 5 experienced panelists whose work routine include steviol glycosides sensory evaluation. Panelists were asked to describe and rate the attributes such as sweetness onset, total sweetness, rounded sweetness, bitterness, astringency, mouthfeel, sweet lingering and bitter aftertaste. The beverages were served cold in 4-oz. plastic cups and panelists were given warm mineral water to rinse and unsalted crackers between samples. The lemon lime flavored carbonated beverages were aged for 1 week before sensory evaluation.

### Results

The sensory evaluation showed that the ternary blend of rebaudiosides M, D and B were preferred to the ternary blend of rebaudiosides M, D and A in the diet lemon-lime carbonated beverages without allulose. The evaluation also showed that allulose improved the sensory characteristics regardless of the blend by reducing the sweet lingering and bitter aftertaste, as well as bringing more body to the beverages.

### EXAMPLE 3: Sensory Evaluation of Mock Beverages by a Sensory Descriptive Panel

Beverages were prepared with the following ingredients:

**TABLE 1**

| **Blends in Citric Acid / Sodium Citrate Buffer** | |
|---|---|
| **Ingredient** | **Amount (grams)** |
| Filtered water | 99.6 |
| Citric acid | 0.117 |
| Sodium citrate | 0.027 |
| Steviol glycosides | 0.256 |
| **Total** | **100** |

The samples were pasteurized (89° Celcius for 30 sec) and hot-filled in 400 ml PET bottles and quickly cooled down.

The Sensory Descriptive Panel consisted of 12 trained panelists and all the samples were evaluated in triplicate (5 sips) using a 15- intensity scale where 0 = No attribute intensity; 15 = very intense. The samples were served in fully randomized order within replications. Water, unsalted crackers and 12 min break were used to cleanse the palate between samples.

The following attributes were evaluated: sweet, sweet aftertaste, bitter, bitter aftertaste, astringent and sour.

### Results

**TABLE 2: BLENDS TOTALING 500 ppm**

| **BLEND** | **TOTAL CONC. (ppm)** | **SENSORY ATTRIBUTES SCALE 1-15** | | | | | |
|---|---|---|---|---|---|---|---|
| | | **Sweet** | **Sweet aftertaste** | **Bitter** | **Bitter aftertaste** | **Astringent** | **Sour** |
| REB-B (100 ppm), REB-D (100 ppm), REB-M (300 ppm) | 500 | 10.1 | 5.1 | 2.9 | 1.3 | 3.2 | 3.3 |
| REB-A (50 ppm), REB-B (50 ppm), REB-D (100 ppm), REB-M (300 ppm) | 500 | 10.1 | 5.2 | 2.7 | 1.3 | 3.2 | 3.2 |
| REB-A Alone | 600 | 9.5 | 5 | 3.3 | 1.7 | 3.1 | 3.2 |

**TABLE 3: BLENDS TOTALING 600 ppm**

| **BLEND** | **TOTAL CONC (ppm)** | **SENSORY ATTRIBUTES SCALE 1-15** | | | | | |
|---|---|---|---|---|---|---|---|
| | | **Sweet** | **Sweet aftertaste** | **Bitter** | **Bitter aftertaste** | **Astringent** | **Sour** |
| REB-B (101 ppm), REB-D (199 ppm), REB-M (300 ppm) | 600 | 10.2 | 5.3 | 2.8 | 1.3 | 3.2 | 3.1 |
| REB-A (204 ppm), REB-B (152 ppm), REB-D (38 ppm), REB-M (205 ppm) | 599 | 9.3 | 4.9 | 2.5 | 1 | 2.8 | 3.2 |
| REB-A Alone | 600 | 9.5 | 5 | 3.3 | 1.7 | 3.1 | 3.2 |

The ternary and quaternary blends provided similar results in all sensory attributes, with the quaternary A/B/D/M blends showing improved sensory qualities (less bitter, less bitter aftertaste) desired by consumers who liked beverages sweetened with stevia.

The ternary and quaternary blends performed better than the single component Reb A beverages. 600 ppm of Reb A was not enough to provide similar overall sweetness to the blends containing 500 ppm of the ternary or quaternary blends. The beverages containing 600 ppm also elicited undesirable attributes (bitter, bitter aftertaste) that were more pronounced compared to the ternary and quaternary blends.

## Claims

1. A zero-calorie beverage comprising a quaternary blend of rebaudioside B, rebaudioside D, rebaudioside A and rebaudioside M, wherein the quaternary blend: (a) comprises from about 5% to about 20% rebaudioside B by weight, from about 9% to about 25% rebaudioside D by weight, from about 50% to about 75% rebaudioside M by weight and from about 9% to about 25% rebaudioside A by weight; (b) provides a total concentration of steviol glycosides of about 500 ppm; and (c) provides a sucrose equivalence of from about 9.5% (w/v) to about 10.5% (w/v).

2. The beverage of claim 1, wherein the blend provides rebaudioside B in a concentration from about 10 ppm to about 200 ppm, rebaudioside D in a concentration from about 20 ppm to about 200 ppm, rebaudioside M in a concentration from about 50 ppm to about 400 ppm and rebaudioside A in a concentration from about 20 ppm to about 150 ppm.

3. The beverage of claim 1, wherein the quaternary blend provides a sucrose equivalence of about 10% (w/v).

4. The beverage of claim 1, further comprising at least one rare sugar selected from the group consisting of allulose, sorbose, lyxose, ribulose, xylose, xylulose, D-allose, L-ribose, D-tagatose, L-glucose, L-fucose, L-arabinose, turanose and combinations thereof.

5. The beverage of claim 4, wherein the at least one rare sugar is allulose.

6. The beverage of claim 4, wherein the rare sugar is present in the beverage in an amount from 0.5% to about 3.0%.

7. The beverage of claim 1, wherein the pH of the beverage is from about 1.8 to about 10.

8. The beverage of claim 1, wherein the pH of the beverage is from about 2 to about 5.

9. The beverage of claim 1, further comprising at least one functional ingredient selected from the group consisting of a vitamin, mineral, antioxidant, preservative, glucosamine, polyphenol and combinations thereof.

10. The beverage of claim 1, wherein the quaternary blend comprises 10% rebaudioside B, 15% rebaudioside D, 60% rebaudioside M and 15% rebaudioside A.

11. The beverage of claim 1, wherein the beverage comprises 50 ppm rebaudioside B, 100 ppm rebaudioside D, 300 ppm rebaudioside M and 50 ppm rebaudioside A.

## Patentansprüche

1. Kalorienfreies Getränk, umfassend eine quaternäre Mischung aus Rebaudiosid B, Rebaudiosid D, Rebaudiosid A und Rebaudiosid M, wobei die quaternäre Mischung: (a) etwa 5 Gew.-% bis etwa 20 Gew.-% Rebaudiosid B, etwa 9 Gew.-% bis etwa 25 Gew.-% Rebaudiosid D, etwa 50 Gew.-% bis etwa 75 Gew.-% Rebaudiosid M und etwa 9 Gew.-% bis etwa 25 Gew.-% Rebaudiosid A umfasst, (b) eine Gesamtkonzentration an Steviolglykosiden von etwa 500 ppm bereitstellt und (c) eine Saccharoseäquivalenz von etwa 9,5% (w/v) bis etwa 10,5% (w/v) bereitstellt.

2. Getränk nach Anspruch 1, wobei die Mischung Rebaudiosid B in einer Konzentration von etwa 10 ppm bis etwa 200 ppm, Rebaudiosid D in einer Konzentration von etwa 20 ppm bis etwa 200 ppm, Rebaudiosid M in einer Konzentration von etwa 50 ppm bis etwa 400 ppm und Rebaudiosid A in einer Konzentration von etwa 20 ppm bis etwa 150 ppm bereitstellt.

3. Getränk nach Anspruch 1, wobei die quaternäre Mischung eine Saccharoseäquivalenz von etwa 10% (w/v) bereitstellt.

4. Getränk nach Anspruch 1, weiterhin umfassend mindestens einen aus der aus Allulose, Sorbose, Lyxose, Ribulose, Xylose, Xylulose, D-Allose, L-Ribose, D-Tagatose, L-Glucose, L-Fucose, L-Arabinose, Turanose und Kombinationen davon bestehenden Gruppe ausgewählten seltenen Zucker.

5. Getränk nach Anspruch 4, wobei es sich bei dem mindestens einen seltenen Zucker um Allulose handelt.

6. Getränk nach Anspruch 4, wobei der seltene Zucker in dem Getränk in einer Menge von 0,5 % bis etwa 3,0 % vorhanden ist.

7. Getränk nach Anspruch 1, wobei der pH-Wert des Getränks etwa 1,8 bis etwa 10 beträgt.

8. Getränk nach Anspruch 1, wobei der pH-Wert des Getränks etwa 2 bis etwa 5 beträgt.

9. Getränk nach Anspruch 1, weiterhin umfassend mindestens einen aus der aus einem Vitamin, Mineralstoff, Antioxidationsmittel, Konservierungsstoff, Glucosamin, Polyphenol und Kombinationen davon bestehenden Gruppe ausgewählten funktionellen Inhaltsstoff.

10. Getränk nach Anspruch 1, wobei die quaternäre Mischung 10 % Rebaudiosid B, 15 % Rebaudiosid D, 60 % Rebaudiosid M und 15% Rebaudiosid A umfasst.

11. Getränk nach Anspruch 1, wobei das Getränk 50 ppm Rebaudiosid B, 100 ppm Rebaudiosid D, 300 ppm Rebaudiosid M und 50 ppm Rebaudiosid A umfasst.

## Revendications

1. Boisson à zéro calorie comprenant un mélange quaternaire de rébaudioside B, rébaudioside D, rébaudioside A et rébaudioside M, le mélange quaternaire : (a) comprenant d'environ 5 % à environ 20 % de rébaudioside B en poids, d'environ 9 % à environ 25 % de rébaudioside D en poids, d'environ 50 % à environ 75 % de rébaudioside M en poids et d'environ 9 % à environ 25 % de rébaudioside A en poids ; (b) fournissant une concentration totale de glycosides de stéviol d'environ 500 ppm ; et (c) fournissant un équivalent en saccharose allant d'environ 9,5 % (p/v) à environ 10,5 % (p/v).

2. Boisson selon la revendication 1, le mélange fournissant du rébaudioside B en une concentration d'environ 10 ppm à environ 200 ppm, du rébaudioside D en une concentration d'environ 20 ppm à environ 200 ppm, du rébaudioside M en une concentration d'environ 50 ppm à environ 400 ppm et du rébaudioside A en une concentration d'environ 20 ppm à environ 150 ppm.

3. Boisson selon la revendication 1, le mélange quaternaire fournissant un équivalent en saccharose d'environ 10 % (p/v).

4. Boisson selon la revendication 1, comprenant en outre au moins un sucre rare choisi dans le groupe constitué par l'allulose, le sorbose, le lyxose, le ribulose, le xylose, le xylulose, le D-allose, le L-ribose, le D-tagatose, le L-glucose, le L-fucose, le L-arabinose, le turanose et des combinaisons correspondantes.

5. Boisson selon la revendication 4, l'au moins un sucre rare étant l'allulose.

6. Boisson selon la revendication 4, le sucre rare étant présent dans la boisson en une quantité de 0,5 % à environ 3,0 ô.

7. Boisson selon la revendication 1, le pH de la boisson étant d'environ 1,8 à environ 10.

8. Boisson selon la revendication 1, le pH de la boisson étant d'environ 2 à environ 5.

9. Boisson selon la revendication 1, comprenant en outre au moins un ingrédient fonctionnel choisi dans le groupe constitué par une vitamine, un minéral, un antioxydant, un conservateur, la glucosamine, un polyphénol et des combinaisons correspondantes.

10. Boisson selon la revendication 1, le mélange quaternaire comprenant 10 % de rébaudioside B, 15 % de rébaudioside D, 60 % de rébaudioside M et 15 % de rébaudioside A.

11. Boisson selon la revendication 1, la boisson comprenant 50 ppm de rébaudioside B, 100 ppm de rébaudioside D, 300 ppm de rébaudioside M et 50 ppm de rébaudioside A.
